# FASCICULE DE BREVET EUROPEEN

(11) **EP 2 651 848 B1**
(45) Date de publication et mention de la délivrance du brevet: **12.02.2020**
(21) Numéro de dépôt: 11794521.2
(22) Date de dépôt: 15.12.2011
(51) Int. Cl.: C04B 28/02, C04B 28/04, C04B 28/08, C04B 28/14, C04B 40/00

(54) **PROCEDE DE REDUCTION DE CHROME VI A L'AIDE D'UN ADJUVANT A BASE DE FER**
VERFAHREN ZUR REDUZIERUNG VON CHROM VI UNTER VERWENDUNG EINES EISENBASIERTEN ZUSATZSTOFFS
PROCESS FOR REDUCING CHROMIUM VI BY USING AN IRON-BASED ADJUVANT

(30) Priorité: 15.12.2010 FR 1060554
(43) Date de publication de la demande: 23.10.2013
(73) Titulaire: Chryso, 92440 Issy-Les-Moulineaux (FR)
(72) Inventeur: EYCHENNE-BARON, Christophe, F-92340 Bourg-la-Reine (FR); AYME, Karen, F-45300 Pithiviers (FR)
(74) Mandataire: Lavoix
(86) Numéro de dépôt international: PCT/EP2011/072921
(87) Numéro de publication internationale: WO 2012/080402

(56) Documents cités:
- EP-A1- 1 505 045
- EP-A1- 1 533 287
- FR-A1- 2 894 956
- BERNER ET AL.: "Iron Binding by Sodium Alginate", JOURNAL OF FOOD SCIENCE, vol. 48, 31 December 1983 (1983-12-31), pages 755-758,

## Description

L'invention concerne un procédé pour réduire les ions de chrome (VI) en chrome (III) dans les liants hydrauliques, notamment les ciments. Elle concerne également un procédé pour sa préparation ainsi que son utilisation.

Le chrome (VI) hydrosoluble peut provoquer des réactions d'irritation ou d'allergie en contact avec la peau et est classé par l'Union européenne dans la catégorie des substances devant être assimilées à des cancérogènes. Aussi, il est recommandé d'en réduire l'exposition au possible. Ainsi, la Directive Européenne 2003/53/CE du 18 juin 2003 impose pour les ciments une teneur en chrome (VI) inférieure à 2 ppm.

On connaît des adjuvants permettant de traiter le ciment pour réduire le chrome (VI). Ainsi, on peut utiliser des compositions contenant du sulfate de fer (II) comme agent de réduction du chrome (VI). Le sulfate de fer est économique et de ce fait un candidat réducteur de chrome (VI) intéressant, mais est peu efficace en raison de la tendance du fer (II) à s'oxyder en fer (III) à l'air.

Cependant, les ions ferreux s'oxydent aussi facilement en solution aqueuse et une telle formulation n'est de ce fait pas stable au stockage.

Par ailleurs, les adjuvants de réduction de chrome (VI) doivent conserver lors de l'utilisation du liant hydraulique leur capacité de réduire les ions chrome (VI) alors qu'ils sont ajoutés au liant hydraulique lors de sa fabrication. Ainsi, ces adjuvants sont ajoutés avant ou lors de l'étape de broyage du clinker, qui a lieu en atmosphère oxydante associée à des températures élevées et un taux d'humidité potentiellement élevé.

Enfin, la réduction du chrome (VI) a lieu essentiellement au moment de la gâchée, en conséquence le réducteur doit donc résister à l'oxydation dans le liant hydraulique pendant la durée de stockage afin de conserver ses qualités.

Le document EP 1 752 428 propose de disperser un réducteur de chrome sous forme de particules à base de fer dans un milieu aqueux comprenant un modificateur de viscosité, par exemple un polysaccharide. Le modifiant de viscosité est destiné à assurer une concentration uniforme dans la dispersion même après un stockage prolongé et/ou à enrober les particules afin de les rendre plus résistants vis-à-vis de l'oxydation.

La demande de brevet EP 1 505 045 divulgue l'utilisation de sulfate de fer (II), notamment en solution avec un acide citrique ou ascorbique pour la réduction des ions Cr(VI).

La demande de brevet FR 2 894 956 propose de mettre en contact un sulfate de fer avec une solution de polysaccharide, et de sécher le mélange pour aboutir à des particules de sulfate de fer enrobées, afin de stabiliser le Fe(II) lors du stockage du ciment. Au gâchage, le pH élevé formé dans le ciment au contact avec l'eau rompt l'enveloppe de polysaccharide pour libérer le Fe(II) au cœur des particules enrobées, lequel peut réduire le Cr(VI).

La demande EP1533287 divulgue une dispersion comprenant du sulfate ferreux pour la réduction de chromate dans le ciment. Cette dispersion est obtenue par ajout du sel métallique dans le polysaccharide.

Les formulations dans lesquelles le réducteur est sous forme solide requièrent généralement un surdosage important du fait que le réducteur n'est pas entièrement disponible pour la réaction. Or des quantités excessives de fer peuvent avoir des effets néfastes dans les compositions hydrauliques, en particulier augmenter la demande en eau, induire une modification de la cinétique de prise du liant hydraulique, provoquer l'apparition de taches de rouille à la surface des bétons.

Un des buts de la présente invention était donc de proposer un adjuvant pour réduire les ions chrome (VI) en chrome (III) à base de fer (II) sous forme liquide qui soit stable au stockage avant emploi, pendant les étapes de transformation du liant hydraulique et pendant le stockage du liant hydraulique pendant une durée prolongée.

Un autre but de la présente invention était de proposer un tel adjuvant permettant de réduire la teneur en chrome (VI) dans les matériaux hydrauliques à une valeur inférieure à 2 ppm.

Un autre but de la présente invention était de proposer un tel adjuvant qui soit sous forme de solution.

Un autre but de la présente invention était enfin de proposer un tel adjuvant qui soit d'utilisation et de fabrication économique.

Un autre but encore de la présente invention était de proposer un tel adjuvant qui présente une capacité de réduction des ions chrome (VI) constante.

Ces buts et d'autres sont atteints par la présente invention, laquelle a pour objet, selon un premier aspect, un procédé de préparation d'un matériau à teneur réduite en chrome (VI), comprenant l'étape consistant à mettre le matériau en contact avec une quantité appropriée d'un adjuvant sous forme de solution aqueuse présentant un pH compris entre 1 et 5, comprenant une association de fer (II) et d'un polysaccharide ou un de ses sels, dans lequel l'adjuvant sous forme de solution aqueuse est obtenu par introduction du polysaccharide ou l'un de ses sels dans une solution de sel de fer (II).

On entend par le terme « capacité de réduction des ions chrome (VI) constante » un taux de chrome (VI) mesuré selon la norme EN 196-10 inférieur à 2 ppm qui ne varie de pas plus de 25, de préférence pas plus de 10% au cours du stockage de l'adjuvant et du ciment.

On entend par le terme « durée prolongée » une durée de 3 mois, de préférence 6 mois et avantageusement de jusqu' à 12 mois.

On entend viser par le terme « polysaccharide » des polymères constitués de plusieurs monosaccharides liés entre eux par des liaisons glycosidiques. On distingue les homosaccharides, composés du même monosaccharide, des hétérosaccharides, formés de différents saccharides. Les polysaccharides sont généralement extraits de produits d'origine végétale, en particulier de graines et d'algues. On peut mentionner en particulier les celluloses, les amidons et les gommes, en particulier les alginates.

On entend par le terme « alginates » des polysaccharides formés de deux monomères : le mannuronate ou acide mannuronique dont certains sont acétylés et le guluronate ou acide guluronique obtenus à partir d'une famille d'algues brunes, les laminaires. Le terme « alginate » désigne dans le cadre de cet exposé l'acide alginique ainsi que ses sels et esters.

On entend par le terme « association » couvrir tout type de liaison entre deux entités chimiques, notamment par liaison covalente, ionique ou de coordination, mais aussi par interaction plus faible du type forces intermoléculaires, notamment interactions dipole-dipole, liaisons d'hydrogène, liaison de van der Waals, et interactions entre cations et liaisons pi. Particulièrement visé est une association qui engendre le déplacement des bandes d'absorption IR de l'alginate de sodium à 1409 et 1600 cm⁻¹ vers des nombres d'onde plus élevés.

La présente invention est basée sur la découverte qu'il est possible de stabiliser le fer (II) en milieu aqueux légèrement acide en l'associant avec un polysaccharide, et plus particulièrement un alginate. Bien que la structure spécifique de l'espèce formée n'ait pas encore été élucidée avec certitude, il est à présent supposé que le fer (II) forme avec l'alginate un complexe moléculaire soluble en phase aqueuse.

L'adjuvant comporte à titre d'espèce réductrice principale des ions de fer (II). La nature du sel de fer (II) mis en œuvre importe peu. En pratique, il sera choisi parmi les sels fer (II) solubles dans l'eau, tels que le chlorure ferreux, le sulfate ferreux FeSO₄ heptahydraté, dihydraté ou anhydre, le fluorure ferreux Fe₃(F₃)₂ ou l'acétate ferreux.

La concentration en fer (II) dans l'adjuvant peut varier dans une large mesure. En pratique, la concentration de l'adjuvant résultera d'un compromis entre une concentration élevée afin de limiter l'apport en eau et une viscosité pas trop élevée. Habituellement, l'adjuvant mis en œuvre selon l'invention contient 1 à 30, et de préférence 5 à 25 % en poids de fer (exprimé en % en poids de fer).

Selon l'invention, l'adjuvant mis en œuvre contient par ailleurs un polysaccharide. Particulièrement préférés dans le cadre de la présente invention sont les polysaccharides d'origine marine comme l'agar-agar, un polymère de galactose contenu dans la paroi cellulaire de certaines algues rouges, la carraghénane, polymère de galactose sulfaté extrait de certaines algues rouges, et les alginates.

De préférence, le polysaccharide est un alginate. Particulièrement préférés sont les sels de l'acide alginique de sodium, potassium, de calcium, de magnésium, et les alginates de métaux comme l'aluminium. On compte également dans la famille des alginates les esters de l'acide alginique avec des alcools mono ou polyvalents, comme par exemple l'alginate de propane-1,2-diol. Bien entendu, on pourra utiliser d'autres composés susceptibles de libérer des ions alginates en solution.

La concentration en polysaccharide dans l'adjuvant peut varier largement, mais peut dans certains cas être limitée par la viscosité qu'elle engendre, comme il sera expliqué plus loin. Afin de conserver une viscosité compatible avec un emploi aisé, l'adjuvant comportera de préférence entre 0,01 à 10%, avantageusement 0,1 à 5% et tout particulièrement 0.25 à 2,5% en poids de polysaccharide.

On obtient les meilleurs résultats en termes de stabilisation si on respecte un ratio en poids entre le polysaccharide et le fer compris entre 1 : 0.1 et 1 : 100 et de préférence entre 1 : 0.5 et 1 : 50 et tout particulièrement entre 1 : 1 et 1 : 25.

Avantageusement, l'adjuvant est sous forme de solution aqueuse.

L'adjuvant mis en œuvre selon l'invention est légèrement acide, avec un pH compris entre 1 et 5 et encore préféré entre 1.5 et 4.

Aussi, l'adjuvant peut comprendre en outre un agent d'ajustement de pH. On choisit de préférence un acide non oxydant complexant le fer (II), comme par exemple l'acide sulfurique. Afin d'éviter une modification intempestive des propriétés et du comportement des matériaux traités, l'agent d'ajustement de pH est de préférence choisi parmi des additifs utilisés habituellement dans la préparation de ces matériaux.

Enfin, l'adjuvant décrit peut par ailleurs contenir d'autres additifs habituels pour l'application visée, notamment pour la préparation du liant hydraulique tel que le ciment, comme des agents de moutures, des agents activateurs de résistances, des agents entraineurs d'airs. En particulier, l'adjuvant peut comprendre en outre un agent anti-oxydant afin de prolonger encore sa stabilité au stockage. Cet anti-oxydant pourra être choisi de manière avantageuse dans la famille des piégeurs de radicaux libres, comme par exemple l'hydroquinone et ses dérivés, le gallate de propyle, 2(3) t-butyl-4-hydroxyanisole, 2,6-di-tert-butyl-p-crésol, l'éthylvanilline, l'huile de romarin, la lécithine, la vitamine E, l'acide ascorbique.

Au total, l'adjuvant mis en œuvre selon l'invention est formulé avantageusement de manière à présenter un extrait sec compris entre 5 et 50%, de préférence 10 à 40 et tout particulièrement 20 à 30 % en poids.

Il est décrit un procédé de préparation de l'adjuvant mis en œuvre selon l'invention, comprenant les étapes consistant à mettre en contact un sel de fer (II) avec un polysaccharide ou un de ses sels en présence d'une quantité appropriée d'eau.

Comme évoqué ci-dessus, il ressort des expériences menées que pour la préparation d'un adjuvant concentré, il est préférable d'introduire le polysaccharide dans une solution de fer (II). En effet, lorsque l'on introduit la solution de fer dans la solution de polysaccharide, on obtient une solution inhomogène comportant des grumeaux. Sans vouloir être lié par cette théorie, il est possible que la présence des ions de fer casse la solution ou le gel de polysaccharide.

Selon un mode de réalisation préféré du procédé, la mise en contact d'un sel de fer (II) avec un polysaccharide ou un de ses sels a donc lieu par introduction du polysaccharide en poudre dans la solution de fer (II).

Le fer (II) ainsi stabilisé par association avec un polysaccharide dans l'adjuvant est stable vis-à-vis de l'oxydation, mais reste disponible pour une réaction d'oxydoréduction avec le chrome (VI). Par ailleurs, il est supposé que le polysaccharide contribue à l'élimination du chrome du liant hydraulique par absorption.

L'adjuvant décrit est particulièrement utile pour la fabrication de matériaux, notamment matériaux hydrauliques, à teneur en chrome (VI) réduite.

On entend par le terme « teneur réduite en chrome (VI) » désigner en particulier une teneur inférieure à 2 ppm de chrome (VI) hydrosoluble.

Particulièrement visés sont les matériaux de type liant hydraulique. On entend par « liant hydraulique » désigner alors notamment les ciments, mais aussi le sulfate de calcium et ses formes hydratées, les cendres volantes et les laitiers.

La mise en œuvre de l'adjuvant tel que décrit permet notamment la préparation de ciments présentant une teneur inférieure à 2 ppm et remplissant dès lors les exigences posées par la Directive Européenne 2003/53/CE mentionnée.

Selon un dernier aspect enfin, l'invention vise l'utilisation de l'adjuvant décrit ci-dessus pour la préparation d'un matériau à teneur réduite en chrome (VI).

L'adjuvantation est généralement réalisée au cours de l'étape de préparation du ciment en cimenterie. Elle consiste à introduire l'adjuvant, après l'étape d'obtention du clinker, au moment de la préparation du ciment.

Cependant, il est également envisageable de procéder à l'addition du réducteur lors de la gâchée de la composition hydraulique telle qu'un béton ou d'un mortier ou d'un coulis.

Selon un mode de réalisation préféré, l'adjuvant est mis en œuvre, dans le cadre de la préparation de ciment, au moment du broyage.

Le dosage sera avantageusement déterminé en fonction de la teneur relevée en ions chrome (VI) hydrosolubles du matériau.

L'invention sera mieux comprise à la lecture des exemples donnés à titre illustratif mais non limitatif et de la figure en annexe qui montre :

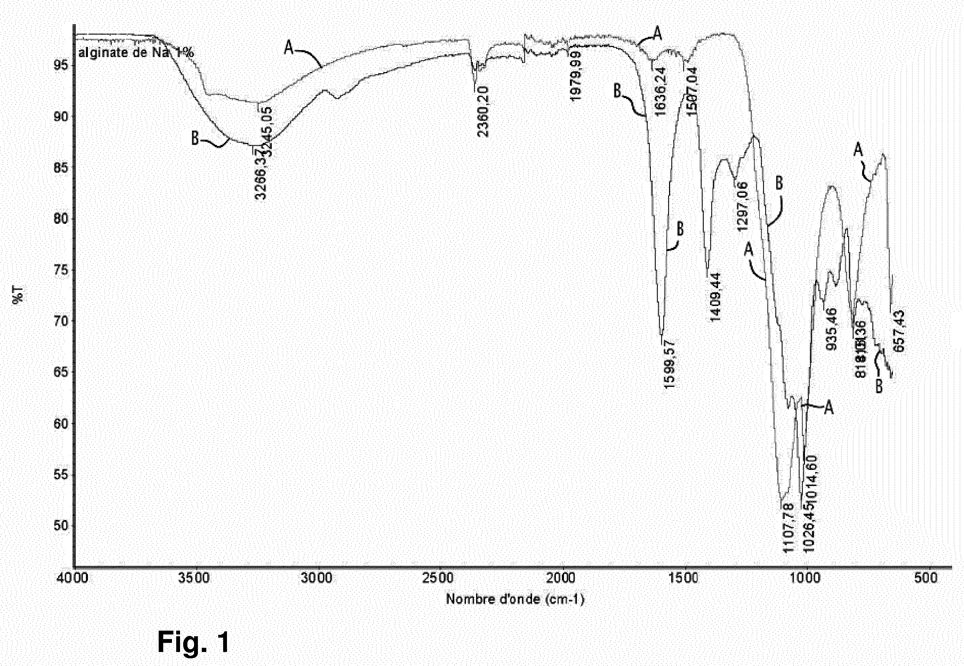

- FIG. 1 :: Spectre infrarouge de la formulation de l'exemple 3 et à titre de comparaison, d'alginate de sodium.

### EXEMPLES

Sauf indication contraire, les pourcentages indiqués s'entendent comme des pourcentages en masse de l'espèce considérée, c'est-à-dire de sulfate de fer (FeSO₄) heptahydraté ou d'alginate de sodium.

### EXEMPLE 1 (selon l'invention)

Dans un récipient adapté, muni d'un agitateur et de pâle défloculeuse (vitesse 1150 tpm), on introduit 92,63 g d'eau de ville puis de l'acide sulfurique concentré (96%) en quantité suffisante pour avoir un pH de 2,5 dans la solution. A l'eau acidifiée, on ajoute ensuite 6,61g de FeSO₄ heptahydraté (fourni par la société Aldrich). On ajoute ensuite progressivement 0,5 g de l'alginate de sodium (fourni par la société Aldrich) et on maintient l'agitation pendant 30 minutes après la fin de l'ajout. On obtient une solution homogène dont la composition est indiquée dans le tableau 1 ci-dessous.

### EXEMPLE 2 (comparatif)

Dans un récipient adapté, muni d'un agitateur et de pâle défloculeuse (vitesse 1150 tpm), on introduit 92,63 g d'eau de ville puis de l'acide sulfurique concentré (96%) en quantité suffisante pour avoir un pH de 2,5 dans la solution. On ajoute ensuite 0,5 g de l'alginate de sodium (fourni par la société Aldrich). A la solution épaisse qui se forme, on ajoute ensuite 6,61 g de FeSO₄ heptahydraté (fourni par la société Aldrich). On obtient une solution inhomogène, comportant des grumeaux, dont la composition est indiquée dans le tableau 1 ci-dessous.

### EXEMPLE 3 (selon l'invention)

Dans un récipient adapté, muni d'un agitateur et de pâle défloculeuse (vitesse 1150 tpm), on introduit 89,92 g d'eau distillée puis de l'acide sulfurique concentré (96%) en quantité suffisante pour avoir un pH de 2,5 dans la solution. On ajoute ensuite 9 g de FeSO₄.7H₂O puis 0,68g d'alginate de sodium et on maintient l'agitation pendant 30 minutes après la fin de l'ajout. On obtient une solution dont la composition est indiquée dans le tableau 1 ci-dessous.

**Tableau 1 : composition des formulations selon les exemples**

| **EXEMPLE** | **FeSO₄·7 H₂O** [% en poids] | **Alginate de sodium** [% en poids] | **H₂SO₄ (96%)** [% en poids] | **Eau** [% en poids] | **pH** |
|---|---|---|---|---|---|
| 1 | 6.61 | 0.5 | 0.26 | 92.63 | 2 |
| 2 | 6.61 | 0.5 | 0.26 | 92.63 | 3.7 |
| 3 | 9 | 0.68 | 0.4 | 89.92 | 1.5 |

### EXEMPLES 4 - 10

Afin d'étudier l'impact des paramètres de préparation sur l'aspect de la solution, l'exemple 3 a été répété en variant a) le débit d'alginate de sodium et b) la vitesse d'agitation. L'agitation est assurée par une pâle défloculeuse et elle est maintenue pendant 30 minutes après la fin de l'ajout. Le débit d'ajout d'alginate de sodium (poudre) est contrôlé au moyen d'un doseur gravimétrique dont on règle la vitesse et donc le temps d'ajout. Les paramètres utilisés pour chaque exemple sont indiqués dans le tableau 2 ci-dessous.

**Tableau 2 : Durée d'addition et vitesse agitation**

| **EXEMPLE** | **Vitesse moteur** [tours par minutes] | **Durée d'ajout** [min] |
|---|---|---|
| 4 | 547 | 11.25 |
| 5 | 547 | 23.75 |
| 6 | 850 | 5 |
| 7 | 850 | 17.5 |
| 8 | 850 | 30 |
| 9 | 1150 | 11.25 |
| 10 | 1150 | 23.75 |

### Test de stabilité des adjuvants

La stabilité des adjuvants préparés vis-à-vis des conditions régnant pendant le broyage du clinker et lors du stockage a été évaluée selon la procédure décrite ci-après.

Dans un broyeur à boulets d'une capacité de 5 kg maintenu à une température de 100°C, on introduit un ciment de référence (ciment CEM I de l'usine La Couronne, comprenant 95% en poids de clinker et 5% en poids de gypse, contenant 5,5 ppm de chrome (VI) à réduire).

On ajoute la quantité de formulation selon les exemples précédents correspondant au dosage indiqué dans le tableau 3 ci-dessous.

Ensuite, on procède au broyage jusqu'à un blaine nominal de 3500 cm²/g. Après le broyage, on détermine le taux de chrome (VI) résiduel d'après la méthode de dosage photométrique (norme EN 196-10). Les mesures de teneur en CrVI sont répétées à intervalles réguliers pendant une durée de 3 mois après emballage du ciment en sac papier. Les résultats sont résumés dans le tableau 3 ci-dessous.

**Tableau 3 : Evolution du taux de Cr (VI) dans le temps**

| **Exemple** | **Dosage** [ppm Fe / ppm Cr(VI) | **Taux de chrome (VI) après temps** [mois] | | | | | | |
|---|---|---|---|---|---|---|---|---|
| | | **0** | **0,25** | **0,5** | **1** | **1,5** | **2** | **3** |
| 1 | 2207 | 1.7 | 1.3 | 1.4 | 1.4 | 1.3 | 1.3 | 1.5 |
| 2 | 2207 | 1.3 | 1.5 | 1.5 | 1.8 | 1.5 | 1.4 | 1.4 |
| 3 | 2207 | 1.06 | 0.93 | ND | 0.9 | ND | ND | ND |
| 4 | 1620 | 1.85 | 1.82 | ND | 1.58 | ND | ND | ND |
| 5 | 1620 | 1.91 | 1.75 | ND | 1.58 | ND | ND | ND |
| 6 | 1620 | 1.38 | 1.03 | ND | 0.96 | ND | ND | ND |
| 7 | 1620 | 1.20 | 1.16 | ND | 1.02 | ND | ND | ND |
| 8 | 1620 | 1.67 | 1.40 | ND | 1.44 | ND | ND | ND |
| 9 | 1620 | 2.12 | 1.96 | ND | 1.70 | ND | ND | ND |
| 10 | 1620 | 1.06 | 0.93 | ND | 0.9 | ND | ND | ND |

On constate que les paramètres étudiés ont un impact sur la stabilisation du fer (II) telle que mesurée en termes de réduction de chrome (VI). Toutefois, les résultats à ce jour ne permettent pas de dégager clairement une plage préférée. Il est possible que d'autres paramètres, comme d'éventuels effets de mouture, augmentant la finesse du ciment et par ce biais la teneur en chrome VI jouent également un rôle.

On constate que la quasi-totalité des solutions testées permet de réduire la teneur en chrome (VI) à une valeur inférieure à 2 ppm, donc en dessous du seuil réglementaire applicable aux ciments selon la Directive mentionnée en plus haut. Ces résultats sont maintenus dans le temps, et pendant une durée prolongée, les valeurs relevées après trois mois étant toujours très proches de celles mesurées initialement.

### Etude de l'interaction fer/polvsaccharide

Afin de mieux définir la constitution de l'adjuvant mis en œuvre selon l'invention, l'association de fer et du polysaccharide a été étudiée par spectroscopie infrarouge (IR).

Dans ce cadre, la formulation de l'exemple 3 a été séchée à l'étuve à 100°C pendant 24 h afin d'éliminer l'eau (échantillon A).

En parallèle, une solution d'alginate de sodium a été préparée par mélange de 99 g d'eau distillée et 1 g d'alginate de sodium jusqu'à dissolution complète de l'alginate de sodium. La solution d'alginate de sodium obtenue a été séchée 24 h à 100°C pour éliminer l'eau (échantillon B).

Les deux compositions ainsi obtenues après séchage ont été analysées par spectroscopie infrarouge sur un spectrophotomètre Infrarouge Thermo Scientific, Nicolet IS 10. L'analyse infrarouge est réalisée en transmission (Smart Omnis Transmission-Diamant Séparatrice XT-KBr 16 balayages, résolution 4, gamme spectrale 4000-600 cm-1).

La figure unique illustre le spectre IR recueilli pour la composition séchée de l'exemple 3 et pour la composition séchée d'alginate de sodium. La comparaison de ces deux spectres montre notamment un décalage des bandes spectrales de l'alginate de sodium à 1409 et 1600 cm⁻¹ vers 1507 et 1636 cm⁻¹ pour la solution de l'exemple 3.

Cette étude met en évidence une modification de la structure moléculaire de l'alginate de sodium dans l'adjuvant mis en œuvre selon l'invention.

Il est supposé que ce décalage de bandes est dû à la substitution de l'ion sodium de l'alginate par l'ion fer. En effet, les solutions sont préparées avec de l'eau distillée et ne contiennent donc quasi pas d'autres espèces susceptibles de modifier l'alginate de sodium.

## Revendications

1. Procédé de préparation d'un matériau à teneur réduite en chrome (VI), comprenant l'étape consistant à mettre le matériau en contact avec une quantité appropriée d'un adjuvant sous forme de solution aqueuse présentant un pH compris entre 1 et 5, comprenant une association de fer (II) et d'un polysaccharide ou d'un de ses sels, dans lequel l'adjuvant sous forme de solution aqueuse est obtenu par introduction du polysaccharide ou l'un de ses sels dans une solution de sel de fer (II).

2. Procédé selon la revendication 1, dans lequel le polysaccharide est l'acide alginique ou un de ses sels.

3. Procédé selon l'une des revendications 1 à 2, dans lequel le polysaccharide est l'alginate de sodium.

4. Procédé selon l'une des revendications 1 à 3, dans lequel l'adjuvant présente un extrait sec compris entre 5 et 50%.

5. Procédé selon la revendication 4, dans lequel l'adjuvant comprend un agent d'ajustement de pH

6. Procédé selon la revendication 5, dans lequel l'agent d'ajustement est l'acide sulfurique.

7. Procédé selon l'une des revendications 1 à 6, dans lequel l'adjuvant comprend en outre un agent anti-oxydant choisi parmi l'hydroquinone et ses dérivés, le gallate de propyle, (t-butyl-4-hydroxyanisole), (2,6-di-tert-butyl-p-crésol), l'éthylvanilline, l'huile de romarin, la lécithine, la vitamine E, l'acide ascorbique.

8. Procédé selon l'une quelconque des revendications 1 à 7, dans lequel le matériau est un liant hydraulique.

9. Procédé selon la revendication 8, dans lequel le matériau est choisi parmi les ciments, le sulfate de calcium et ses formes hydratées, les cendres volantes et les laitiers.

10. Utilisation d'un adjuvant sous forme de solution aqueuse présentant un pH compris entre 1 et 5, comprenant une association de fer (II) et d'un polysaccharide ou d'un de ses sels pour la préparation d'un matériau à teneur réduite en chrome (VI), l'adjuvant sous forme de solution aqueuse étant obtenu par introduction du polysaccharide ou l'un de ses sels dans une solution de sel de fer (II).

11. Utilisation selon la revendication 10, dans lequel l'adjuvant est tel que défini selon l'une quelconque des revendications 2 à 7.

## Patentansprüche

1. Verfahren zur Herstellung eines Materials mit reduziertem Chrom(VI)-Gehalt, aufweisend den Schritt des Inkontaktbringens des Materials mit einer geeigneten Menge eines Zusatzstoffs in Form einer wässrigen Lösung mit einem pH-Wert zwischen 1 und 5, aufweisend eine Kombination von Eisen(II) und einem Polysaccharid oder einem seiner Salze, wobei der Zusatzstoff in Form einer wässrigen Lösung durch Einbringen des Polysaccharids oder eines seiner Salze in eine Eisen(II)-Lösung erhalten ist.

2. Verfahren nach Anspruch 1, wobei das Polysaccharid Alginsäure oder eines ihrer Salze ist.

3. Verfahren nach einem der Ansprüche 1 bis 2, wobei das Polysaccharid Natriumalginat ist.

4. Verfahren nach einem der Ansprüche 1 bis 3, wobei der Zusatzstoff einen Trockenextrakt zwischen 5 und 50% aufweist.

5. Verfahren nach Anspruch 4, wobei der Zusatzstoff ein pH-einstellendes Mittel aufweist.

6. Verfahren nach Anspruch 5, wobei das pH-einstellende Mittel Schwefelsäure ist.

7. Verfahren nach einem der Ansprüche 1 bis 6, wobei der Zusatzstoff ferner ein Antioxidationsmittel aufweist, ausgewählt aus Hydrochinon und seinen Derivaten, Propylgallat, (t-Butyl-4-hydroxyanisol), (2,6-Di-tert-butyl-p-kresol), Ethylvanillin, Rosmarinöl, Lecithin, Vitamin E, Ascorbinsäure.

8. Verfahren nach einem der Ansprüche 1 bis 7, wobei das Material ein hydraulisches Bindemittel ist.

9. Verfahren nach Anspruch 8, wobei das Material ausgewählt ist aus Zementen, Calciumsulfat und seinen hydratisierten Formen, Flugaschen und Schlacke.

10. Verwendung eines Zusatzstoffes in Form einer wässrigen Lösung mit einem pH-Wert zwischen 1 und 5, aufweisend eine Kombination von Eisen(II) und einem Polysaccharid oder einem seiner Salze zur Herstellung eines Materials mit reduziertem Chrom (VI) -Gehalt, wobei der Zusatzstoff in Form einer wässrigen Lösung durch Einbringen des Polysaccharids oder eines seiner Salze in eine Eisen(II)-Lösung erhalten ist.

11. Verwendung nach Anspruch 10, wobei der Zusatzstoff wie in einem der Ansprüche 2 bis 7 definiert ist.

## Claims

1. Method for preparing a material having a reduced chromium(VI) content, comprising the step consisting in bringing the material into contact with an appropriate quantity of an additive in the form of an aqueous solution having a pH of between 1 and 5, comprising a combination of iron(II) and a polysaccharide or one of the salts thereof, in which the additive in the form of an aqueous solution is obtained by introducing polysaccharide or one of the salts thereof into an iron(II) salt solution.

2. Method according to claim 1, wherein the polysaccharide is alginic acid or one of the salts thereof.

3. Method according to either claim 1 or claim 2, wherein the polysaccharide is sodium alginate.

4. Method according to any of claims 1 to 3, wherein the additive has a dry extract of between 5 and 50%.

5. Method according to claim 4, wherein the adjusting agent comprises a pH adjusting agent.

6. Method according to claim 5, wherein the adjusting agent is sulfuric acid.

7. Method according to any of claims 1 to 6, wherein the additive further comprises an antioxidant agent selected from hydroquinone and the derivatives thereof, propyl gallate, (t-butyl-4-hydroxyanisole), (2,6-di-tert-butyl-p-cresol), ethylvanillin, rosemary oil, lecithin, vitamin E, or ascorbic acid.

8. Method according to any of claims 1 to 7, wherein the material is a hydraulic binder.

9. Method according to claim 8, wherein the material is selected from cements, calcium sulfate that the hydrated forms thereof, fly ash, and slag.

10. Use of an additive in the form of an aqueous solution having a pH of between 1 and 5, comprising a combination of iron(II) and a polysaccharide or one of the salts thereof, for preparing a material having a reduced chromium(VI) content, the additive in the form of an aqueous solution being obtained by introducing polysaccharide or one of the salts thereof into an iron(II) salt solution.

11. Use according to claim 10, wherein the additive is as defined according to any of claims 2 to 7.
